# EUROPEAN PATENT APPLICATION

(11) **EP 3 790 348 A1**
(43) Date of publication of application: **10.03.2021**
(21) Application number: 18922998.2
(22) Date of filing: 21.06.2018
(51) Int. Cl.: H04W 74/08

(54) **COMMUNICATION METHOD, BASE STATION, AND TERMINAL**

(71) Applicant: Huawei Technologies Co., Ltd., Longgang District Shenzhen, Guangdong 518129 (CN)
(72) Inventor: HAN, Jinxia, Shenzhen, Guangdong 518129 (CN); LI, Zhenyu, Shenzhen, Guangdong 518129 (CN); LI, Zheng, Shenzhen, Guangdong 518129 (CN); NAN, Yang, Shenzhen, Guangdong 518129 (CN); ZHANG, Wurong, Shenzhen, Guangdong 518129 (CN)
(74) Representative: Goddar, Heinz J.
(86) International application number: PCT/CN2018/092195
(87) International publication number: WO 2019/241961

(57) **Abstract**

Embodiments of this application disclose a communication method, a base station, and a terminal. The method includes: receiving, by a base station, a random access request message sent by a terminal based on a preset frame structure; sending a random access response message to the terminal based on the preset frame structure; receiving an RRC connection request message sent by the terminal based on the preset frame structure; and sending a contention resolution message to the terminal based on the preset frame structure, to complete random access of the terminal, where the preset frame structure includes a first time-frequency resource segment and a second time-frequency resource segment; the first time-frequency resource segment includes a time-frequency resource used to send a synchronization signal and a PBCH, and further includes an idle time-frequency resource and/or an uplink time-frequency resource used to send uplink information; the second time-frequency resource segment includes an integer quantity of data frames with same duration; and duration of the first time-frequency resource segment is equal to duration of any data frame. According to the embodiments of this application, processing complexity when a communications device sends and receives information can be reduced, and a duty cycle during communication can be further reduced, so that a requirement of an ETSI regulation can be met more easily.

## Description

### TECHNICAL FIELD

This application relates to the field of communications technologies, and in particular, to a communication method, a base station, and a terminal.

### BACKGROUND

An unlicensed spectrum narrowband internet of things (Unlicensed Spectrum Narrow Band-Internet of Things, NB-IoT-U) technology is a technology that is applied to a narrowband internet of things and that is in a MulteFire alliance (MulteFire Alliance, MFA), and has a technical feature of the narrowband internet of things (Narrow Band-Internet of Things, NB-IoT). However, an NB-IoT-U works in an unlicensed spectrum. Therefore, to adapt to unlicensed spectrum regulations, some designs for adapting to the spectrum regulations are made on the NB-IoT-U based on a design of the NB-IoT.

A European telecommunications standards institute (European telecommunications standards institute, ETSI) spectrum regulation is used as an example. The ETSI regulation imposes the following constraints on a device using an unlicensed band below 1 GHz (refer to COMMISSION IMPLEMENTING DECISION (EU) 2017/1483 of 8 August 2017):

For an 869.4-869.65 MHz (band 54) band, a maximum equivalent radiated power (or effective radiated power (Effective Radiated Power, ERP)) is 27 dBm. Within an hour, a maximum duty cycle (duty cycle) is 10%. For an 865-868 MHz (band 47b) band, only four frequency bands: 865.6-865.8 MHz, 866.2-866.4 MHz, 866.8-867.0 MHz, and 867.4-867.6 MHz may be used, and an adaptive power control technology is required. A maximum equivalent radiated power is 27 dBm. Within an hour, a maximum duty cycle of a network access point is 10%, and a duty cycle of a non-network access point is 2.5%.

Based on a current progress of an MFA meeting, a possible frame structure design of the NB-IoT-U in the ETSI is as follows: The ETSI supports at least a design in a single carrier, namely, the band 54, and may support a design in two carriers, namely, the band 54 and the band 47b, or even a design in more carriers subsequently. However, to ensure compatibility, even in multi-carrier design, the band 54 is an anchor (anchor) carrier. To be specific, a primary synchronization signal (Primary Synchronization Signal, PSS), a secondary synchronization signal (Secondary Synchronization Signal, SSS), and system information are all sent in the band 54. The system information includes a master information block (master information block, MIB) and a system information block (system information block, SIB). The MIB is sent through a PBCH (Physical broadcast channel, physical broadcast channel).

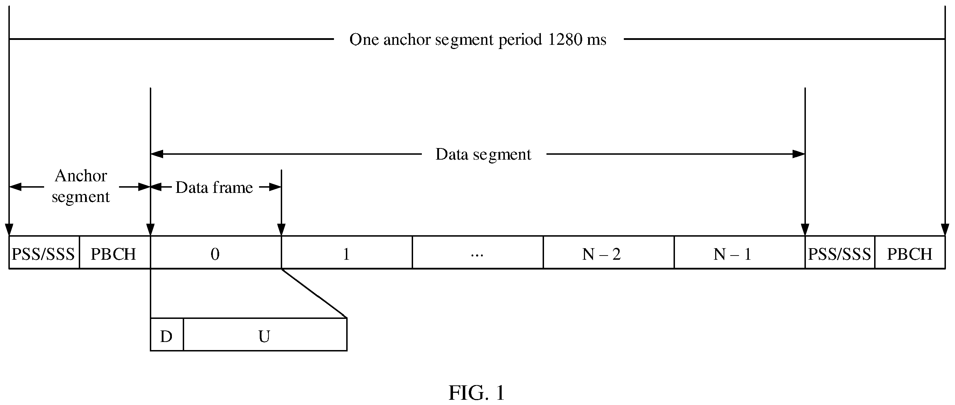

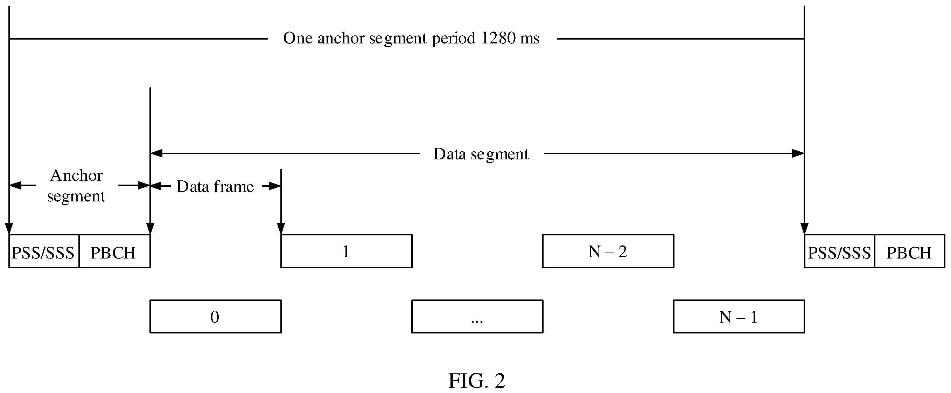

FIG. 1 is a schematic diagram of a single-carrier design of the NB-IoT-U in the ETSI, and FIG. 2 is a schematic diagram of a two-carrier design of the NB-IoT-U in the ETSI. As shown in FIG. 1 and FIG. 2, according to the current progress of the MFA meeting, a periodicity of an anchor segment (anchor segment) is 1280 ms, and duration of the anchor segment is fixed to 20 ms. In the duration of the anchor segment, a downlink synchronization signal, namely, a PSS/SSS occupies 10 ms, and a physical downlink broadcast channel (Physical Broadcast Channel, PBCH) occupies 10 ms. Therefore, total duration of a data segment is 1260 ms. The MFA further specifies that in the ETSI, duration of each data frame (data frame) in the data segment of the NB-IoT-U may be 20 ms, 40 ms, or 80 ms, and each data frame includes a downlink frame (shown by D in the figure) and an uplink frame (shown by U in the figure). If a length of the data frame is 20 ms, the data frame includes a downlink frame of 2 ms and an uplink frame of 18 ms; if the length of the data frame is 40 ms, the data frame includes a downlink frame of 4 ms and an uplink frame of 36 ms; and if the length of the data frame is 80 ms, the data frame includes a downlink frame of 8 ms and an uplink frame of 72 ms. It can be learned that, because the total duration of the data segment is 1260 ms, when the length of the data frame is 20 ms, one anchor segment periodicity includes one anchor segment and 63 data frames. However, when the length of the data frame is 40 ms, one anchor segment periodicity includes one anchor segment, 31 data frames, and one incomplete data frame of 20 ms. Similarly, when the length of the data frame is 80 ms, one anchor segment periodicity includes one anchor segment, 15 data frames, and one incomplete data frame of 60 ms. The incomplete data frame herein is understood as a frame with a length different from a defined length of another data frame. For example, if a defined length of a data frame is 40 ms, but in a data segment, a length of a frame is not 40 ms, the frame is an incomplete frame, and another frame may be referred to as a complete frame.

Currently, the MFA does not discuss how to process the incomplete data frame. In a possible solution, for an incomplete data frame, duration occupied in a downlink is the same as downlink duration of another complete data frame, and remaining duration is uplink duration. That is, when a length of a data frame is 40 ms, duration of an incomplete data frame is 20 ms, where a downlink duration is 4 ms, and an uplink duration is 16 ms; when a length of a data frame is 80 ms, duration of an incomplete data frame is 60 ms, where a downlink duration is 8 ms, and an uplink duration is 52 ms.

If the foregoing solution is used, when there is an incomplete data frame, there are the following problems:
(1) Duration of an anchor segment is different from duration of a data frame. As a result, when a communications device such as a base station or a terminal performs frame switching between the anchor segment and the data frame, timers of different lengths need to be disposed. In this way, when the base station and the terminal send and receive information, processing complexity is increased.
   For example, when receiving a segment anchor, the terminal initializes a timer 1 at a start boundary t1 of the segment anchor, and sets duration of the timer 1 to T1. When timing of the timer 1 is equal to the duration T1 (namely, 20 ms), the terminal needs to reset the timer 1 and set the duration of the timer to T2. When the timing of the timer 1 is equal to the duration T2 (namely, 20 ms, 40 ms, or 80 ms), the terminal needs to reset the timer 1, and set the duration of the timer 1 to T2. When the timing of the timer 1 is equal to the duration T2 (namely, 20 ms, 40 ms, or 80 ms), the terminal resets the timer 1, and so on. In addition, at the start boundary t1 of the segment anchor, the terminal further needs to initialize a timer 2. When the timer 2 reaches a start boundary t3 of the incomplete data frame, the terminal needs to reset the timer 1, and set the duration of the timer 1 to T5. When the timing of the timer 1 is equal to the duration T5 (namely, 20 ms or 60 ms), the terminal resets the timer 1 and enters a next segment anchor processing periodicity. In addition, because uplink duration in a complete data frame and uplink duration in an incomplete data frame are different, in actual application, it is likely that a timer needs to be used to distinguish between the two scenarios. As a result, processing operations of the timer and processing complexity of the base station and the terminal are further increased.
(2) According to the ETSI regulation, a duty cycle is required to be 10% for sending on the base station side. For a complete data frame, a downlink proportion is 10% in a current MFA frame structure. However, a length of an incomplete data frame is less than that of a complete data frame, but downlink duration is the same. As a result, a duty cycle of downlink transmission of the incomplete data frame is greater than 10%.

### SUMMARY

A technical problem to be resolved in embodiments of this application is to provide a communication method, a base station, and a terminal, to reduce information processing complexity that is during communication between the base station and the terminal, so that a duty cycle during the communication can meet a requirement of an ETSI regulation.

According to a first aspect, a base station receives a random access request message sent by a terminal based on a preset frame structure.

The base station sends a random access response message to the terminal based on the preset frame structure.

The base station receives a radio resource control RRC connection request message sent by the terminal based on the preset frame structure.

The base station sends a contention resolution message to the terminal based on the preset frame structure, to complete random access of the terminal.

The preset frame structure includes a first time-frequency resource segment and a second time-frequency resource segment. The first time-frequency resource segment includes a time-frequency resource used to send a synchronization signal and a physical broadcast channel PBCH, and further includes an idle time-frequency resource and/or an uplink time-frequency resource used to send uplink information. The second time-frequency resource segment includes an integer quantity of data frames with same duration. Duration of the first time-frequency resource segment is equal to duration of any data frame in the second time-frequency resource segment. The data frame includes a downlink time-frequency resource used to send downlink information and an uplink time-frequency resource used to send uplink information. The random access request message and the RRC connection request message are carried on the uplink time-frequency resource in the first time-frequency resource segment and/or the uplink time-frequency resource in the second time-frequency resource segment. The random access response message and the contention resolution message are carried on the downlink time-frequency resource in the second time-frequency resource segment.

In a possible implementation, before that a base station receives a random access request message sent by a terminal based on a preset frame structure, the method further includes:

The base station sends the synchronization signal and the PBCH to the terminal on the first time-frequency resource segment in the preset frame structure.

The base station sends system information to the terminal on the downlink time-frequency resource in the second time-frequency resource segment through a physical downlink shared channel PDSCH.

In a possible implementation, the method further includes:

The base station switches to another frequency on the idle time-frequency resource, to complete signal quality measurement or interference level measurement.

In a possible implementation, if the base station does not receive the RRC connection request message, the base station sends a retransmission indication to the terminal on the downlink time-frequency resource in the second time-frequency resource segment through a physical downlink control channel PDCCH.

The base station receives, on the uplink time-frequency resource in the first time-frequency resource segment and/or the uplink time-frequency resource in the second time-frequency resource segment through a physical uplink shared channel PUSCH, an RRC connection request message retransmitted by the terminal.

In a possible implementation, after the random access of the terminal is completed, the method further includes:

The base station transmits uplink data or downlink data with the terminal.

The uplink data is carried on the uplink time-frequency resource in the first time-frequency resource segment and/or the uplink time-frequency resource in the second time-frequency resource segment, and the downlink data is carried on the downlink time-frequency resource in the second time-frequency resource segment.

In a possible implementation, in the first time-frequency resource, a time domain position of the uplink time-frequency resource and/or a time domain position of the idle time-frequency resource are/is after a time domain position of the time-frequency resource for sending the synchronization signal and the PBCH; or
a time domain position of the uplink time-frequency resource and/or a time domain position of the idle time-frequency resource are/is before a time domain position of the time-frequency resource for sending the synchronization signal and the PBCH.

In a possible implementation, a periodicity of the preset frame structure is 1280 milliseconds, the duration of the first time-frequency resource segment is 40 milliseconds, in the first time-frequency resource, total duration of the uplink time-frequency resource and/or the idle time-frequency resource is 20 milliseconds, the second time-frequency resource segment includes 31 data frames, and duration of each data frame is 40 milliseconds;
a periodicity of the preset frame structure is 1280 milliseconds, the duration of the first time-frequency resource segment is 80 milliseconds, in the first time-frequency resource, total duration of the uplink time-frequency resource and/or the idle time-frequency resource is 60 milliseconds, the second time-frequency resource segment includes 15 data frames, and duration of each data frame is 80 milliseconds; or
a periodicity of the preset frame structure is 1280 milliseconds, the duration of the first time-frequency resource segment is 20 milliseconds, in the first time-frequency resource, total duration of the uplink time-frequency resource and/or the idle time-frequency resource is 0 milliseconds, the second time-frequency resource segment includes 63 data frames, and duration of each data frame is 20 milliseconds.

According to a second aspect, an embodiment of this application provides a communication method. The method may include:
A terminal sends a random access request message to a base station based on a preset frame structure.

The terminal receives a random access response message sent by the base station based on the preset frame structure.

The terminal sends a radio resource control RRC connection request message to the base station based on the preset frame structure.

The terminal receives a contention resolution message sent by the base station based on the preset frame structure, to complete random access of the terminal.

The preset frame structure includes a first time-frequency resource segment and a second time-frequency resource segment. The first time-frequency resource segment includes a time-frequency resource used to send a synchronization signal and a physical broadcast channel PBCH, and further includes an idle time-frequency resource and/or an uplink time-frequency resource used to send uplink information. The second time-frequency resource segment includes an integer quantity of data frames with same duration. Duration of the first time-frequency resource segment is equal to duration of any data frame in the second time-frequency resource segment. The data frame includes a downlink time-frequency resource used to send downlink information and an uplink time-frequency resource used to send uplink information. The random access request message and the RRC connection request message are carried on the uplink time-frequency resource in the first time-frequency resource segment and/or the uplink time-frequency resource in the second time-frequency resource segment. The random access response message and the contention resolution message are carried on the downlink time-frequency resource in the second time-frequency resource segment.

In a possible implementation, before that a terminal sends a random access request message to a base station based on a preset frame structure, the method further includes:
The terminal receives the synchronization signal and the PBCH that are sent by the base station on the first time-frequency resource segment in the preset frame structure.

The terminal receives the system information sent by the base station on the downlink time-frequency resource in the second time-frequency resource segment through a physical downlink shared channel PDSCH.

In a possible implementation, the method further includes:
The terminal switches to another frequency on the idle time-frequency resource, to complete signal quality measurement of a neighboring cell.

In a possible implementation, if the terminal does not send the RRC connection request message or fails to send the RRC connection request message, the terminal receives a retransmission indication sent by the base station on the downlink time-frequency resource in the second time-frequency resource segment through a physical downlink control channel PDCCH.

The terminal retransmits an RRC connection request message to the base station on the uplink time-frequency resource in the first time-frequency resource segment and/or the uplink time-frequency resource in the second time-frequency resource segment through a physical uplink shared channel PUSCH.

In a possible implementation, after the random access of the terminal is completed, the method further includes:
The terminal transmits uplink data or downlink data with the base station.

The uplink data is carried on the uplink time-frequency resource in the first time-frequency resource segment and/or the uplink time-frequency resource in the second time-frequency resource segment, and the downlink data is carried on the downlink time-frequency resource in the second time-frequency resource segment.

In a possible implementation, in the first time-frequency resource, a time domain position of the uplink time-frequency resource and/or a time domain position of the idle time-frequency resource are/is after a time domain position of the time-frequency resource for sending the synchronization signal and the PBCH; or
a time domain position of the uplink time-frequency resource and/or a time domain position of the idle time-frequency resource are/is before a time domain position of the time-frequency resource for sending the synchronization signal and the PBCH.

In a possible implementation, a periodicity of the preset frame structure is 1280 milliseconds, the duration of the first time-frequency resource segment is 40 milliseconds, in the first time-frequency resource, total duration of the uplink time-frequency resource and/or the idle time-frequency resource is 20 milliseconds, the second time-frequency resource segment includes 31 data frames, and duration of each data frame is 40 milliseconds;
a periodicity of the preset frame structure is 1280 milliseconds, the duration of the first time-frequency resource segment is 80 milliseconds, in the first time-frequency resource, total duration of the uplink time-frequency resource and/or the idle time-frequency resource is 60 milliseconds, the second time-frequency resource segment includes 15 data frames, and duration of each data frame is 80 milliseconds; or
a periodicity of the preset frame structure is 1280 milliseconds, the duration of the first time-frequency resource segment is 20 milliseconds, in the first time-frequency resource, total duration of the uplink time-frequency resource and/or the idle time-frequency resource is 0 milliseconds, the second time-frequency resource segment includes 63 data frames, and duration of each data frame is 20 milliseconds.

According to a third aspect, an embodiment of this application provides a base station. The base station may include:
a receiving unit, configured to receive a random access request message sent by a terminal based on a preset frame structure; and
a sending unit, configured to send a random access response message to the terminal based on the preset frame structure.

The receiving unit is further configured to receive a radio resource control RRC connection request message sent by the terminal based on the preset frame structure.

The sending unit is further configured to send a contention resolution message to the terminal based on the preset frame structure, to complete random access of the terminal.

The preset frame structure includes a first time-frequency resource segment and a second time-frequency resource segment. The first time-frequency resource segment includes a time-frequency resource used to send a synchronization signal and a physical broadcast channel PBCH, and further includes an idle time-frequency resource and/or an uplink time-frequency resource used to send uplink information. The second time-frequency resource segment includes an integer quantity of data frames with same duration. Duration of the first time-frequency resource segment is equal to duration of any data frame in the second time-frequency resource segment. The data frame includes a downlink time-frequency resource used to send downlink information and an uplink time-frequency resource used to send uplink information. The random access request message and the RRC connection request message are carried on the uplink time-frequency resource in the first time-frequency resource segment and/or the uplink time-frequency resource in the second time-frequency resource segment. The random access response message and the contention resolution message are carried on the downlink time-frequency resource in the second time-frequency resource segment.

In a possible implementation, the sending unit is further configured to:
send the synchronization signal and the PBCH to the terminal on the first time-frequency resource segment in the preset frame structure; and
send system information to the terminal on the downlink time-frequency resource in the second time-frequency resource segment through a physical downlink shared channel PDSCH.

In a possible implementation, the base station further includes:
a measurement unit, configured to switch to another frequency on the idle time-frequency resource, to complete signal quality measurement or interference level measurement.

In a possible implementation, if the receiving unit does not receive the RRC connection request message, the sending unit is further configured to send a retransmission indication to the terminal on the downlink time-frequency resource in the second time-frequency resource segment through a physical downlink control channel PDCCH.

The receiving unit is further configured to receive, on the uplink time-frequency resource in the first time-frequency resource segment and/or the uplink time-frequency resource in the second time-frequency resource segment through a physical uplink shared channel PUSCH, an RRC connection request message retransmitted by the terminal.

In a possible implementation, the receiving unit and the sending unit are further configured to:
transmit uplink data or downlink data with the terminal.

The uplink data is carried on the uplink time-frequency resource in the first time-frequency resource segment and/or the uplink time-frequency resource in the second time-frequency resource segment, and the downlink data is carried on the downlink time-frequency resource in the second time-frequency resource segment.

In a possible implementation, in the first time-frequency resource, a time domain position of the uplink time-frequency resource and/or a time domain position of the idle time-frequency resource are/is after a time domain position of the time-frequency resource for sending the synchronization signal and the PBCH; or
a time domain position of the uplink time-frequency resource and/or a time domain position of the idle time-frequency resource are/is before a time domain position of the time-frequency resource for sending the synchronization signal and the PBCH.

In a possible implementation, a periodicity of the preset frame structure is 1280 milliseconds, the duration of the first time-frequency resource segment is 40 milliseconds, in the first time-frequency resource, total duration of the uplink time-frequency resource and/or the idle time-frequency resource is 20 milliseconds, the second time-frequency resource segment includes 31 data frames, and duration of each data frame is 40 milliseconds;
a periodicity of the preset frame structure is 1280 milliseconds, the duration of the first time-frequency resource segment is 80 milliseconds, in the first time-frequency resource, total duration of the uplink time-frequency resource and/or the idle time-frequency resource is 60 milliseconds, the second time-frequency resource segment includes 15 data frames, and duration of each data frame is 80 milliseconds; or
a periodicity of the preset frame structure is 1280 milliseconds, the duration of the first time-frequency resource segment is 20 milliseconds, in the first time-frequency resource, total duration of the uplink time-frequency resource and/or the idle time-frequency resource is 0 milliseconds, the second time-frequency resource segment includes 63 data frames, and duration of each data frame is 20 milliseconds.

According to a fourth aspect, an embodiment of this application provides a base station. The base station may include:
a processor, a memory, and a bus, where the processor and the memory are connected by using the bus, the memory is configured to store a group of program code, and the processor is configured to invoke the program code stored in the memory to perform the step in any one of the first aspect or the implementations of the first aspect of the embodiments of this application.

According to a fifth aspect, an embodiment of this application provides a terminal. The terminal may include:
a sending unit, configured to send a random access request message to a base station based on a preset frame structure; and
a receiving unit, configured to receive a random access response message sent by the base station based on the preset frame structure.

The sending unit is further configured to send a radio resource control RRC connection request message to the base station based on the preset frame structure.

The receiving unit is further configured to receive a contention resolution message sent by the base station based on the preset frame structure, to complete random access of the terminal.

The preset frame structure includes a first time-frequency resource segment and a second time-frequency resource segment. The first time-frequency resource segment includes a time-frequency resource used to send a synchronization signal and a physical broadcast channel PBCH, and further includes an idle time-frequency resource and/or an uplink time-frequency resource used to send uplink information. The second time-frequency resource segment includes an integer quantity of data frames with same duration. Duration of the first time-frequency resource segment is equal to duration of any data frame in the second time-frequency resource segment. The data frame includes a downlink time-frequency resource used to send downlink information and an uplink time-frequency resource used to send uplink information. The random access request message and the RRC connection request message are carried on the uplink time-frequency resource in the first time-frequency resource segment and/or the uplink time-frequency resource in the second time-frequency resource segment. The random access response message and the contention resolution message are carried on the downlink time-frequency resource in the second time-frequency resource segment.

In a possible implementation, the receiving unit is further configured to:
receive the synchronization signal and the PBCH that are sent by the base station on the first time-frequency resource segment in the preset frame structure; and
receive system information sent by the base station on the downlink time-frequency resource in the second time-frequency resource segment through a physical downlink shared channel PDSCH.

In a possible implementation, the terminal further includes:
a measurement unit, configured to switch to another frequency on the idle time-frequency resource, to complete signal quality measurement of a neighboring cell.

In a possible implementation, if the terminal does not send the RRC connection request message or fails to send the RRC connection request message, the receiving unit is further configured to receive a retransmission indication sent by the base station on the downlink time-frequency resource in the second time-frequency resource segment through a physical downlink control channel PDCCH.

The sending unit is further configured to retransmit an RRC connection request message to the base station on the uplink time-frequency resource in the first time-frequency resource segment and/or the uplink time-frequency resource in the second time-frequency resource segment through a physical uplink shared channel PUSCH.

In a possible implementation, the sending unit and the receiving unit are further configured to:
transmit uplink data or downlink data with the base station.

The uplink data is carried on the uplink time-frequency resource in the first time-frequency resource segment and/or the uplink time-frequency resource in the second time-frequency resource segment, and the downlink data is carried on the downlink time-frequency resource in the second time-frequency resource segment.

In a possible implementation, in the first time-frequency resource, a time domain position of the uplink time-frequency resource and/or a time domain position of the idle time-frequency resource are/is after a time domain position of the time-frequency resource for sending the synchronization signal and the PBCH; or
a time domain position of the uplink time-frequency resource and/or a time domain position of the idle time-frequency resource are/is before a time domain position of the time-frequency resource for sending the synchronization signal and the PBCH.

In a possible implementation, a periodicity of the preset frame structure is 1280 milliseconds, the duration of the first time-frequency resource segment is 40 milliseconds, in the first time-frequency resource, total duration of the uplink time-frequency resource and/or the idle time-frequency resource is 20 milliseconds, the second time-frequency resource segment includes 31 data frames, and duration of each data frame is 40 milliseconds;
a periodicity of the preset frame structure is 1280 milliseconds, the duration of the first time-frequency resource segment is 80 milliseconds, in the first time-frequency resource, total duration of the uplink time-frequency resource and/or the idle time-frequency resource is 60 milliseconds, the second time-frequency resource segment includes 15 data frames, and duration of each data frame is 80 milliseconds; or
a periodicity of the preset frame structure is 1280 milliseconds, the duration of the first time-frequency resource segment is 20 milliseconds, in the first time-frequency resource, total duration of the uplink time-frequency resource and/or the idle time-frequency resource is 0 milliseconds, the second time-frequency resource segment includes 63 data frames, and duration of each data frame is 20 milliseconds.

According to a sixth aspect, an embodiment of this application provides a terminal. The terminal may include:
a processor, a memory, and a bus, where the processor and the memory are connected by using the bus, the memory is configured to store a group of program code, and the processor is configured to invoke the program code stored in the memory to execute the step in any one of the second aspect or the implementations of the second aspect of the embodiments of this application.

According to a seventh aspect, an embodiment of this application provides a communications system. The communications system may include:
the base station according to any one of the third aspect or the implementations of the third aspect of this application; and
the terminal according to any one of the fifth aspect or the implementations of the fifth aspect of this application.

According to an eighth aspect, an embodiment of this application provides a computer-readable storage medium. The computer-readable storage medium stores an instruction, and when the instruction is run on a computer, the method according to any one of the first aspect or the implementations of the first aspect is implemented.

According to a ninth aspect, an embodiment of this application provides a computer-readable storage medium. The computer-readable storage medium stores an instruction, and when the instruction is run on a computer, the method according to any one of the second aspect or the implementations of the second aspect is implemented.

### BRIEF DESCRIPTION OF DRAWINGS

To describe technical solutions in embodiments of this application or in the background more clearly, the following describes the accompanying drawings used in describing the embodiments of this application or the background.
FIG. 1 is a schematic diagram of a frame structure of an NB-IoT-U in a single-carrier design in the ETSI;
FIG. 2 is a schematic diagram of a frame structure of an NB-IoT-U in a two-carrier design in the ETSI;
FIG. 3 is a schematic flowchart of a communication method according to an embodiment of this application;
FIG. 4 is a schematic flowchart of another communication method according to an embodiment of this application;
FIG. 5 is a schematic diagram of comparison between an existing frame structure and a frame structure according to an embodiment of this application;
FIG. 6 is a schematic diagram of comparison between an existing frame structure and another frame structure according to an embodiment of this application;
FIG. 7 is a schematic diagram of still another frame structure according to an embodiment of this application;
FIG. 8 is a schematic composition diagram of a base station according to an embodiment of this application;
FIG. 9 is a schematic composition diagram of another base station according to an embodiment of this application;
FIG. 10 is a schematic composition diagram of a terminal according to an embodiment of this application; and
FIG. 11 is a schematic composition diagram of another terminal according to an embodiment of this application.

### DESCRIPTION OF EMBODIMENTS

The following describes the embodiments of this application with reference to the accompanying drawings in the embodiments of this application.

In the specification, claims, and accompanying drawings of this application, the terms "including", "having", and any other variants thereof are intended to cover a non-exclusive inclusion. For example, a process, method, system, product, or device that includes a series of steps or units is not limited to the listed steps or units, but optionally further includes an unlisted step or unit, or optionally further includes another inherent step or unit of the process, method, product, or device.

A main communications device in the embodiments of this application includes a base station and a terminal. The terminal may be a terminal that directly communicates with the base station, or may be a relay terminal that performs relay for a remote terminal. This is not limited in the embodiments of this application.

The base station may include but is not limited to: an evolved NodeB (evolved Node B, eNB), a radio network controller (radio network controller, RNC), a NodeB (Node B, NB), a base station controller (Base Station Controller, BSC), a base transceiver station (Base Transceiver Station, BTS), a home base station (for example, Home evolved NodeB or Home Node B, HNB), or the like.

The terminal is also referred to as user equipment (User Equipment, UE), and is a device that provides voice and/or data connectivity for a user, for example, a mobile phone, a tablet computer, or a wearable device that has a wireless connection function.

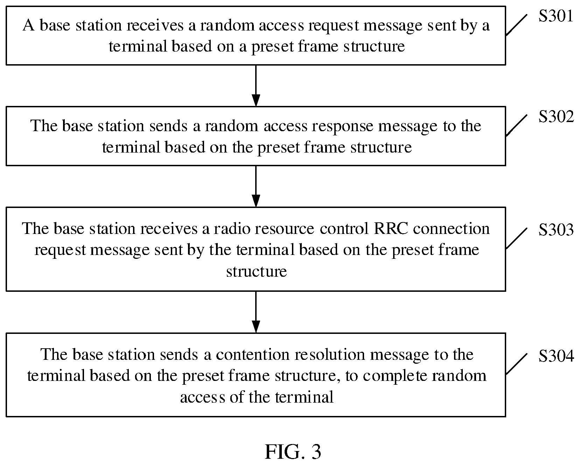

The following describes in detail communication methods and frame structures used in the communication methods in this application with reference to FIG. 3 to FIG. 7.

Referring to FIG. 3, FIG. 5, FIG. 6, and FIG. 7, FIG. 3 is a schematic flowchart of a communication method according to an embodiment of this application. The method may include the following steps:
S301: A base station receives a random access request message (msg1) sent by a terminal based on a preset frame structure.
S302: The base station sends a random access response message (msg2) to the terminal based on the preset frame structure.
S303: The base station receives a radio resource control RRC connection request message (msg3) sent by the terminal based on the preset frame structure.
S304: The base station sends a contention resolution message (msg4) to the terminal based on the preset frame structure, to complete random access of the terminal.

The foregoing procedure is a random access procedure of the terminal. In the random access procedure, the base station and the terminal exchange information by using the preset frame structure.

The preset frame structure includes a first time-frequency resource segment and a second time-frequency resource segment. The first time-frequency resource segment includes a time-frequency resource used to send a synchronization signal and a physical broadcast channel PBCH, and further includes an idle time-frequency resource and/or an uplink time-frequency resource used to send uplink information. The second time-frequency resource segment includes an integer quantity of data frames with same duration. Duration of the first time-frequency resource segment is equal to duration of any data frame in the second time-frequency resource segment. The data frame includes a downlink time-frequency resource used to send downlink information and an uplink time-frequency resource used to send uplink information. The random access request message and the RRC connection request message are carried on the uplink time-frequency resource in the first time-frequency resource segment and/or the uplink time-frequency resource in the second time-frequency resource segment. The random access response message and the contention resolution message are carried on the downlink time-frequency resource in the second time-frequency resource segment.

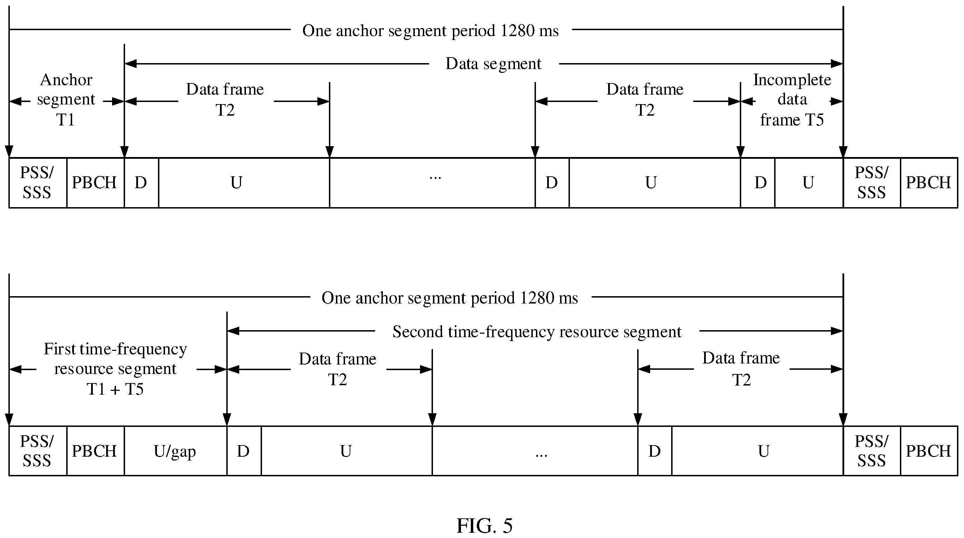

For details, refer to FIG. 5. FIG. 5 is a schematic diagram of comparison between an existing frame structure and a preset frame structure according to an embodiment of this application. As shown in FIG. 5, an upper part of FIG. 5 is a schematic diagram of the existing frame structure.

An anchor segment represents a time-frequency resource segment that is used to send a synchronization signal, a physical broadcast channel, and the like. The synchronization signal includes but is not limited to a PSS, an SSS, a narrowband primary synchronization signal (Narrow Band Primary Synchronization Signal, NPSS), and a narrowband secondary synchronization signal (Narrow Band Secondary Synchronization Signal, NSSS). The physical broadcast channel includes but is not limited to a PBCH and a narrowband physical broadcast channel (NPBCH). The time-frequency resource includes a time domain resource and a frequency domain resource, and the time-frequency resource segment represents a continuous resource segment in time domain and/or frequency domain. The anchor segment is a time-frequency resource segment for sending the synchronization signal, the physical broadcast channel, and the like within a period of time corresponding to a time domain resource and at a frequency domain position corresponding to the period of time.

A data segment represents a time-frequency resource segment used to send a data channel and a reference signal corresponding to the data channel, a time-frequency resource segment used to send a control channel and a reference signal corresponding to the control channel, or a time-frequency resource segment used to send a data channel, a reference signal corresponding to the data channel, a control channel, and a reference signal corresponding to the control channel. The data channel includes but is not limited to a physical downlink shared channel (Physical Downlink Shared Channel, PDSCH), a narrowband physical downlink shared channel (NPDSCH), a physical uplink shared channel (Physical Uplink Shared Channel, PUSCH), and a narrowband physical uplink shared channel (NPUSCH). The control channel includes but is not limited to a physical downlink control channel (Physical Downlink Control Channel, PDCCH), a narrowband physical downlink control channel (NPDCCH), a narrowband physical random access channel (NPRACH), and the like. The reference signal includes but is not limited to a cell-specific reference signal (Cell Reference Signal, CRS), a narrowband downlink reference signal (NRS), and a demodulation reference signal (Demodulation Reference Signal, DMRS). The time-frequency resource includes a time domain resource and a frequency domain resource. The data segment means sending the data channel and the reference signal corresponding to the data channel, sending the control channel and the reference signal corresponding to the control channel, or sending the data channel, the reference signal corresponding to the data channel, the control channel, and the reference signal corresponding to the control channel, within a period of time corresponding to a time domain resource and at a frequency domain position corresponding to the period of time.

The reference signal of the control channel and the control channel are usually sent at the same time, and the reference signal of the data channel and the data channel are usually sent at the same time. For example, the control channel PDCCH and the NRS/CRS are sent at the same time, the PDSCH and the NRS/CRS are sent at the same time, and the PUSCH and the DMRS are sent at the same time.

Data frame: The data frame is located in a data segment, and each data frame corresponds to an independent time-frequency resource. To be specific, each data frame occupies a different time domain resource and a same or different frequency domain resource. Each data frame is independently used to send a data channel and a reference signal corresponding to the data channel, and/or send a control channel corresponding to the data channel, a reference signal corresponding to the control channel, and the like.

An anchor segment (anchor segment) periodicity is a periodicity of a frame structure in this application, and represents a time interval from a time at which an anchor segment starts to be transmitted to a time at which the anchor segment starts to be transmitted next time. In FIG. 5, the anchor segment periodicity is a time interval from a time at which a downlink synchronization signal PSS/SSS starts to be transmitted to a time at which the downlink synchronization signal PSS/SSS starts to be transmitted next time, and is set to 1280 ms according to an existing protocol standard. Duration of the anchor segment is T1, and the unit is millisecond (millisecond, ms). Duration of the data segment is 1280 ms - T1. The data segment includes several data frames (data frame). Duration of a complete data frame is T2, and the unit is millisecond. Each complete data frame includes a downlink time-frequency resource and an uplink time-frequency resource. The downlink time-frequency resource may also be referred to as a downlink part/downlink frame (shown by D in the figure), and the uplink time-frequency resource may also be referred to as an uplink part/uplink frame (shown by U in the figure). In a data frame, duration of the downlink time-frequency resource may be referred to as a downlink frame length, and duration of the uplink time-frequency resource may be referred to as an uplink frame length. When duration of the data frame is 40 ms or 80 ms, an incomplete data frame is generated. Duration of the incomplete data frame is T5, and the unit is millisecond. The incomplete data frame includes a downlink frame length same as that of the complete data frame and an uplink frame length less than that of the complete data frame.

To resolve a problem of information processing complexity, caused by the incomplete data frame, for a communications device such as a base station or a terminal, the existing frame structure is improved in this embodiment of this application. In this way, in a reconstructed frame structure, in an anchor segment periodicity, namely, a frame structure periodicity, the frame structure includes a first time-frequency resource segment and a second time-frequency resource segment. The second time-frequency resource segment is similar to the data segment in the existing frame structure, and includes an integer quantity of data frames with same duration. The first time-frequency resource segment includes the anchor segment in the existing frame structure and a time-frequency resource length corresponding to the incomplete data frame. Duration of the first time-frequency resource segment is equal to duration of any data frame in the second time-frequency resource segment.

A frame structure in a lower part of FIG. 5 is the reconstructed preset frame structure according to an embodiment of this application. The first time-frequency resource segment includes a time-frequency resource used to transmit a synchronization signal (PSS/SSS) and a physical downlink broadcast channel (PBCH), and an uplink time-frequency resource (shown by U in the figure) and/or an idle time-frequency resource (gap). Total duration of the uplink time-frequency resource and/or the idle time-frequency resource is equal to 20 milliseconds or 60 milliseconds. The uplink time-frequency resource and/or the idle time-frequency resource are/is located, in time domain, after the time-frequency resource for sending the synchronization signal and the physical downlink broadcast channel. As shown in FIG. 5, the uplink time-frequency resource and/or the idle time-frequency resource are/is adjacent to the PBCH. The uplink time-frequency resource and/or the idle time-frequency resource represents three possible cases: the uplink time-frequency resource, the idle time-frequency resource, and the uplink time-frequency resource and the idle time-frequency resource.

Compared with the existing frame structure, in a process of reconstructing the existing data frame in the embodiments of this application, all duration corresponding to the incomplete data frame in the existing frame structure may be configured as the uplink time-frequency resource. The uplink time-frequency resource may be inserted after the existing anchor segment (which may be referred to as a first anchor segment) as a padding segment (padding), to constitute the first time-frequency resource segment (which may also be referred to as a second anchor segment) together with the first anchor segment, to ensure that a frame length of the first time-frequency resource segment is the same as a length of a data frame. Compared with the data segment in the existing frame structure, the second time-frequency resource segment is reduced by one incomplete data frame. Therefore, an integer quantity of complete data frames with same duration are included, and there is not an incomplete data frame any more.

It should be noted that names of the first time-frequency resource segment and the second time-frequency resource segment in this application are used to distinguish between each other, and distinguish the first time-frequency resource segment and the second time-frequency resource segment from the anchor segment and the data segment that are in the existing frame structure. The first time-frequency resource segment may also be considered as a new anchor segment, and includes the anchor segment in the existing frame structure and the padding segment including the duration corresponding to the incomplete data frame. The second time-frequency resource segment may also be considered as a new data segment. In the embodiments of this application, names of the anchor segment, the data segment, the anchor segment periodicity, the frame structure periodicity, the first time-frequency resource segment, and the second time-frequency resource segment constitute no limitation on substance content of the embodiments of this application.

For ease of understanding of the frame structure in this application, the following describes in detail a design of the frame structure in this application with reference to the existing frame structure.

A single-carrier design is used as an example:
Duration of the anchor segment in the existing frame structure is 20 ms. When the length of the data frame is 40 ms or 80 ms, there is an incomplete data frame with a length of 20 ms or an incomplete data frame with a length of 60 ms. In addition, a frame length of the first anchor segment is different from a length of a complete data frame.

According to the solution in this embodiment of this application, all time-frequency resources corresponding to the incomplete data frame are configured as uplink time-frequency resources. The uplink time-frequency resources are padded after the first anchor segment, to constitute a second anchor segment, namely, the first time-frequency resource segment, so that the frame length of the first time-frequency resource segment is the same as the length of the complete data frame. As shown in the frame structure in the lower part of FIG. 5, when T1 = 20 ms and T2 = 40 ms, T5 = 20 ms. When T1 = 20 ms and T2 = 80 ms, T5 = 60 ms. According to the frame structure construction manner in this application, T2 = T1 + T5. If first time-frequency resource segment duration of the duration T2 and data frame duration of the duration T2 are referred to as one nframe, according to the solution in this embodiment of this application, it is equivalent to that one anchor segment periodicity (which may also be referred to as a frame structure periodicity) is evenly divided into n nframes. When T2 = 40 ms, and the anchor segment periodicity is 1280 ms, n is equal to 32; when T2 = 80 ms, and the anchor segment periodicity is 1280 ms, n is equal to 16. That is, a reconstructed frame structure may include the following three cases:

A periodicity of the preset frame structure is 1280 milliseconds, the duration of the first time-frequency resource segment is 40 milliseconds, in the first time-frequency resource, total duration of the uplink time-frequency resource and/or the idle time-frequency resource is 20 milliseconds, the second time-frequency resource segment includes 31 data frames, and duration of each data frame is 40 milliseconds;
a periodicity of the preset frame structure is 1280 milliseconds, the duration of the first time-frequency resource segment is 80 milliseconds, in the first time-frequency resource, total duration of the uplink time-frequency resource and/or the idle time-frequency resource is 60 milliseconds, the second time-frequency resource segment includes 15 data frames, and duration of each data frame is 80 milliseconds; or
a periodicity of the preset frame structure is 1280 milliseconds, the duration of the first time-frequency resource segment is 20 milliseconds, in the first time-frequency resource, total duration of the uplink time-frequency resource and/or the idle time-frequency resource is 0 milliseconds, the second time-frequency resource segment includes 63 data frames, and duration of each data frame is 20 milliseconds.

Optionally, because an NB-IoT-U works on an unlicensed frequency, intra-system or inter-system interference exists. The base station may determine, by measuring interference energy of another frequency, whether the frequency is available. Therefore, a time-frequency resource corresponding to an incomplete data frame in the first time-frequency resource segment may be configured as the idle time-frequency resource (gap). To be specific, in the idle time-frequency resource, the base station and a terminal do not need to perform downlink transmission or uplink transmission in the idle time-frequency resource, and the base station and the terminal can complete signal quality measurement or interference level measurement in an idle part. Certainly, alternatively, a part of the time-frequency resource corresponding to the incomplete data frame may be configured as the uplink time-frequency resource, and another part of the time-frequency resource may be configured as the idle time-frequency resource. This is not limited in this embodiment of this application.

A two-carrier design manner is similar. A reconstructed frame structure also satisfies that the frame structure includes the first time-frequency resource segment and the second time-frequency resource segment. The second time-frequency resource segment includes an integer quantity of data frames with same duration. The duration of the first time-frequency resource segment is equal to duration of any data frame in the second time-frequency resource segment. Details are not described herein again.

Optionally, in the first time-frequency resource, a time domain position of the uplink time-frequency resource and/or a time domain position of the idle time-frequency resource may be configured after that of the time-frequency resource (namely, the anchor segment in the existing frame structure) for sending the synchronization signal and the PBCH and adjacent to that of a time-frequency resource for sending the PBCH.

Alternatively, the time domain position of the uplink time-frequency resource and/or a time domain position of the idle time-frequency resource may be configured before that of the time-frequency resource for sending the synchronization signal and the PBCH.

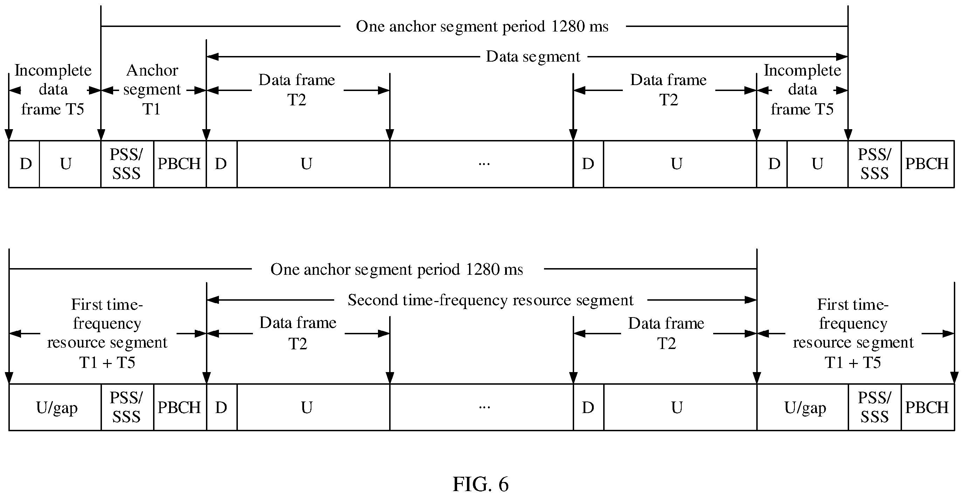

For details, refer to FIG. 6. FIG. 6 is a schematic diagram of comparison between an existing frame structure and another frame structure according to an embodiment of this application. An upper part of FIG. 6 is a schematic diagram of the existing frame structure. The existing frame structure is the same as an existing frame structure in the upper part of FIG. 5 (an incomplete data frame before a current anchor segment is not shown in FIG. 5, but is shown in FIG. 6). When a data frame is 40 ms or 80 ms, there is also an incomplete data frame in an anchor segment periodicity.

Compared with the existing frame structure, in a process of reconstructing the existing frame structure in this embodiment of this application, the uplink time-frequency resource and/or the idle time-frequency resource are/is located, in time domain, before a time-frequency resource for sending a downlink synchronization signal frame and a physical downlink broadcast channel frame. To be specific, a position of the incomplete data frame in the existing frame structure is unchanged, and is still adjacent to a time-frequency resource for sending the synchronization signal. Then, a time-frequency resource corresponding to the incomplete data frame may be configured as an uplink time-frequency resource used to send uplink information, or may be configured as a gap. The time-frequency resource corresponding to the original incomplete data frame and the original anchor segment, namely, the first anchor segment, are combined to form the first time-frequency resource segment, namely, the second anchor segment. In this way, the duration of the first time-frequency resource segment is the same as the duration of the complete data frame, so that there is not an incomplete data frame any more.

A single-carrier design is used as an example:
When the length of the data frame is 40 ms or 80 ms, there is an incomplete data frame with a length of 20 ms or an incomplete data frame with a length of 60 ms. In addition, the frame length of the first anchor segment is different from the length of the complete data frame.

According to the solution in this embodiment of this application, an original time-frequency resource for sending the incomplete data frame is configured as the uplink time-frequency resource and/or the idle time-frequency resource. The time-frequency resource, before the first anchor segment, corresponding to the incomplete data frame is combined with the first anchor segment to constitute the first time-frequency resource segment. In this way, a frame length of the second time-frequency resource segment is the same as the length of the complete data frame. A starting point of the anchor segment periodicity (frame structure) is also changed from a position at which the synchronization signal is transmitted to a starting position of a previous incomplete data frame adjacent to the position at which the synchronization signal is transmitted. An end point of the anchor segment periodicity is also changed from a position at which the synchronization signal starts to be transmitted next time to a starting position of the incomplete data frame before the first anchor segment. A position corresponding to the second time-frequency resource segment also changes accordingly. As shown in a frame structure in a lower part of FIG. 6, when T1 = 20 ms and T2 = 40 ms, T5 = 20 ms. When T1 = 20 ms and T2 = 80 ms, T5 = 60 ms. According to the frame structure construction manner in this application, T2 = T1 + T5. If the first time-frequency resource segment duration of the duration T2 and the data frame duration of the duration T2 are referred to as one nframe, according to the solution in this embodiment of this application, it is equivalent to that one anchor segment periodicity is evenly divided into n nframes. When T2 = 40 ms, and the anchor segment periodicity is 1280 ms, n is equal to 32; when T2 = 80 ms, and the anchor segment periodicity is 1280 ms, n is equal to 16. That is, a reconstructed frame structure may also include the following three cases:

A periodicity of the preset frame structure is 1280 milliseconds, the duration of the first time-frequency resource segment is 40 milliseconds, in the first time-frequency resource, total duration of the uplink time-frequency resource and/or the idle time-frequency resource is 20 milliseconds, the second time-frequency resource segment includes 31 data frames, and duration of each data frame is 40 milliseconds;
a periodicity of the preset frame structure is 1280 milliseconds, the duration of the first time-frequency resource segment is 80 milliseconds, in the first time-frequency resource, total duration of the uplink time-frequency resource and/or the idle time-frequency resource is 60 milliseconds, the second time-frequency resource segment includes 15 data frames, and duration of each data frame is 80 milliseconds; or
a periodicity of the preset frame structure is 1280 milliseconds, the duration of the first time-frequency resource segment is 20 milliseconds, in the first time-frequency resource, total duration of the uplink time-frequency resource and/or the idle time-frequency resource is 0 milliseconds, the second time-frequency resource segment includes 63 data frames, and duration of each data frame is 20 milliseconds.

A two-carrier design manner is similar, and details are not described herein again.

By constructing the frame structure in this embodiment of this application, the duration of the first time-frequency resource segment can be equal to the duration of the data frame, and the duration can be uniformly represented by using a time unit nframe. Duration of the nframe is equal to the duration of the first time-frequency resource segment or the data frame duration. In this way, processing of timers by the base station and the terminal can be simplified, communication efficiency can be improved, and power consumption of a device can be reduced. In addition, it can be ensured that a duty cycle of the data frame is not greater than 10%, and fully meets a requirement of an existing protocol standard.

In addition, to be consistent with the reconstructed frame structure in this embodiment of this application, a frame structure in which both the anchor segment and the data frame are 20 ms may be further configured.

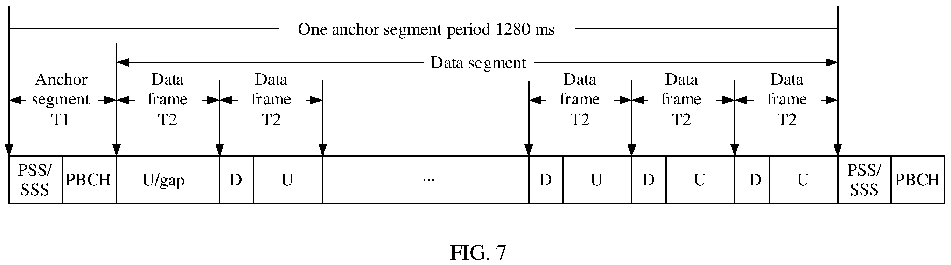

FIG. 7 is a schematic structural diagram of still another frame structure according to an embodiment of this application. As shown in FIG. 7, when a length T2 of a data frame is equal to a frame length T1 of an anchor segment, both of which are 20 ms, the first data frame after the anchor segment may be configured as an uplink time-frequency resource and/or an idle time-frequency resource. In this way, it is consistent with a case in which when a length of the data frame shown in the lower part of FIG. 5 is not equal to a frame length of the anchor segment, the incomplete data frame is configured as the uplink time-frequency resource and/or the idle time-frequency resource and is inserted after the anchor segment.

Certainly, the frame structure shown in the lower part of FIG. 6 may alternatively be used. A data frame before the anchor segment is configured as the uplink time-frequency resource and/or the idle time-frequency resource and is combined with the anchor segment. Details are not described herein again. In this way, unified configuration and management can be implemented.

It should be noted that the frame structure in this embodiment of this application may be used as a static pre-configuration standard structure for a base station and a terminal in an NB-IoT-U to directly use. Alternatively, the frame structure in this embodiment of this application may be compatible with an existing frame structure. When the base station or the terminal detects that there is an incomplete data frame because a data frame is 40 ms or 80 ms, the base station or the terminal reconstructs and uses the existing frame structure in real time. This is not limited in this embodiment of this application.

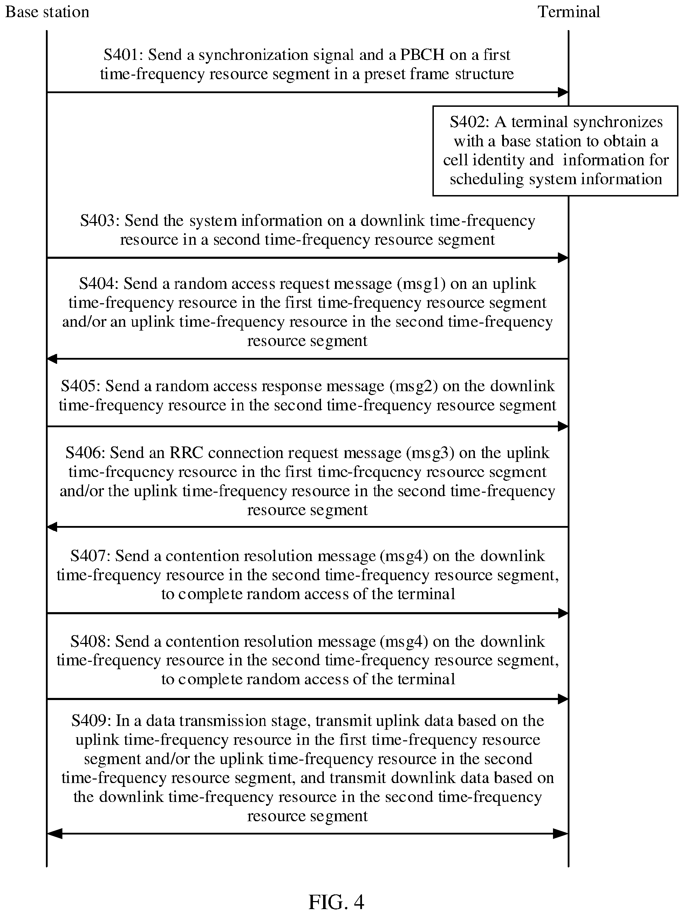

FIG. 4 is a schematic flowchart of another communication method according to an embodiment of this application. The method may include the following steps:
S401: A base station sends a synchronization signal and a PBCH on a first time-frequency resource segment in a preset frame structure.
S402: A terminal synchronizes with the base station to obtain a cell identity and information for scheduling system information.
S403: The base station sends the system information on a downlink time-frequency resource in a second time-frequency resource segment.

To be specific, the base station may send the system information on the downlink time-frequency resource in the second time-frequency resource segment through a data channel PDSCH. The terminal may obtain information such as a random access message, a paging message, and a configuration parameter of a neighboring cell by receiving the system information.

S404: The terminal sends a random access request message (msg1) on an uplink time-frequency resource in the first time-frequency resource segment and/or an uplink time-frequency resource in the second time-frequency resource segment.

To be specific, the terminal may send a random access preamble on the uplink time-frequency resource in the first time-frequency resource segment and/or the uplink time-frequency resource in the second time-frequency resource segment through a control channel NPRACH. By receiving the random access preamble sent on the NPRACH channel, the base station may determine whether a user accesses the base station, and identify a resource block used by the user to send the random access preamble.

If the base station needs to page the terminal, the base station sends a control channel PDCCH and the data channel PDSCH on a downlink part of a data frame in a data segment, and sends an identity of the paged terminal on the PDSCH channel, to notify the terminal to resend the msg1 or re-receive the system information.

Optionally, the terminal may further detect, based on a paging cycle and the paging message that is configured by using the system information, whether the base station sends a paging message for the terminal. To be specific, the terminal may receive, on the downlink time-frequency resource in the second time-frequency resource segment, control information that corresponds to the paging message and that is sent through the control channel PDCCH; receive, based on the control information, a paging message sent through the data channel PDSCH; determine whether there is a paging message for the terminal; and determine whether the msg1 needs to be sent.

S405: The base station sends a random access response message (msg2) on the downlink time-frequency resource in the second time-frequency resource segment.

Specifically, after detecting that a user accesses the base station, the base station sends control information corresponding to the random access response message (msg2) on the downlink time-frequency resource in the second time-frequency resource segment through the control channel PDCCH. Then, the base station sends the random access response message (msg2) on the downlink time-frequency resource in the second time-frequency resource segment through the data channel PDSCH. After detecting the control information corresponding to the random access response message (msg2), the terminal receives the random access response message (msg2) based on the control information.

S406: The terminal sends an RRC connection request message (msg3) on the uplink time-frequency resource in the first time-frequency resource segment and/or the uplink time-frequency resource in the second time-frequency resource segment.

After correctly receiving the random access response message (msg2), the terminal may send the RRC connection request message (msg3) on the uplink time-frequency resource in the first time-frequency resource segment and/or the uplink time-frequency resource in the second time-frequency resource segment through a data channel PUSCH, and the base station receives the msg3 on a corresponding uplink time-frequency resource.

S407: The base station sends a contention resolution message (msg4) on the downlink time-frequency resource in the second time-frequency resource segment, to complete random access of the terminal.

If the base station correctly receives the msg3, the base station may send control information corresponding to the contention resolution message (msg4) on the downlink time-frequency resource in the second time-frequency resource segment through the control channel PDCCH. Then, the base station sends the contention resolution message (msg4) on the downlink time-frequency resource in the second time-frequency resource segment through the data channel PDSCH. After receiving the control information of the msg4 on the downlink time-frequency resource in the second time-frequency resource segment through the control channel, and receiving the msg4 on the downlink time-frequency resource in the second time-frequency resource segment through the data channel, the terminal may send a PUSCH format 2 on the uplink time-frequency resource in the first time-frequency resource segment and/or the uplink time-frequency resource in the second time-frequency resource segment, to feed back whether the msg4 is correctly received.

Optionally, if the base station does not receive the RRC connection request message, the base station sends a retransmission indication to the terminal on the downlink time-frequency resource in the second time-frequency resource segment through the physical downlink control channel PDCCH.

The base station may receive, on the uplink time-frequency resource in the first time-frequency resource segment and/or the uplink time-frequency resource in the second time-frequency resource segment through the physical uplink shared channel PUSCH, an RRC connection request message retransmitted by the terminal.

S408: In a data transmission stage, uplink data is transmitted based on the uplink time-frequency resource in the first time-frequency resource segment and/or the uplink time-frequency resource in the second time-frequency resource segment, and downlink data is transmitted based on the downlink time-frequency resource in the second time-frequency resource segment.

For specific descriptions of the preset frame structure, refer to descriptions of the embodiments in FIG. 5 to FIG. 7. Details are not described herein again.

It should be noted that the foregoing mainly describes a random access process of the terminal and a data transmission process. Any other information exchange process between the terminal and the base station, for example, initial access, information retransmission, cell handover, and data transmission, may be completed by using the preset frame structure according to the embodiments of this application. In addition, uplink information may be transmitted by using the uplink time-frequency resource in the first time-frequency resource segment and/or the uplink time-frequency resource in the second time-frequency resource segment in the preset frame structure, and downlink information may be transmitted by using the downlink time-frequency resource in the second time-frequency resource segment. Specific time-frequency resources selected to transmit information may be configured or indicated by the base station or applied by the terminal for use. This is not limited in this embodiment of this application. In addition, the method for constructing a preset frame structure in this application may be applied to not only the NB-IoT-U, but also LTE or another communications system. In addition, the uplink time-frequency resource and/or the idle time-frequency resource in the first time-frequency resource segment may also be configured as a downlink time-frequency resource, the downlink time-frequency resource and the idle time-frequency resource, or the downlink time-frequency resource and the uplink time-frequency resource for use. When the first time-frequency resource segment includes the downlink time-frequency resource, the downlink time-frequency resource may be configured to transmit the downlink information.

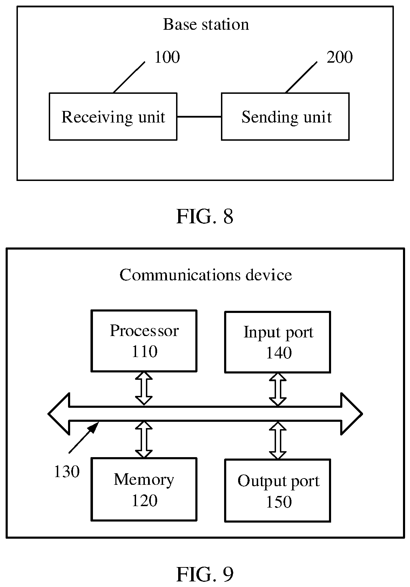

FIG. 8 is a schematic composition diagram of a base station according to an embodiment of this application. The base station may include:
a receiving unit 100, configured to receive a random access request message sent by a terminal based on a preset frame structure; and
a sending unit 200, configured to send a random access response message to the terminal based on the preset frame structure.

The receiving unit 100 is further configured to receive a radio resource control RRC connection request message sent by the terminal based on the preset frame structure.

The sending unit 200 is further configured to send a contention resolution message to the terminal based on the preset frame structure, to complete random access of the terminal.

The preset frame structure includes a first time-frequency resource segment and a second time-frequency resource segment. The first time-frequency resource segment includes a time-frequency resource used to send a synchronization signal and a physical broadcast channel PBCH, and further includes an idle time-frequency resource and/or an uplink time-frequency resource used to send uplink information. The second time-frequency resource segment includes an integer quantity of data frames with same duration. Duration of the first time-frequency resource segment is equal to duration of any data frame in the second time-frequency resource segment. The data frame includes a downlink time-frequency resource used to send downlink information and an uplink time-frequency resource used to send uplink information. The random access request message and the RRC connection request message are carried on the uplink time-frequency resource in the first time-frequency resource segment and/or the uplink time-frequency resource in the second time-frequency resource segment. The random access response message and the contention resolution message are carried on the downlink time-frequency resource in the second time-frequency resource segment.

The sending unit 200 is further configured to:
send the synchronization signal and the PBCH to the terminal on the first time-frequency resource segment in the preset frame structure; and
send system information to the terminal on the downlink time-frequency resource in the second time-frequency resource segment through a physical downlink shared channel PDSCH.

Optionally, the base station further includes:
a measurement unit 300 (not shown in the figure), configured to switch to another frequency on the idle time-frequency resource, to complete signal quality measurement or interference level measurement.

Optionally, if the receiving unit 100 does not receive the RRC connection request message, the sending unit 200 is further configured to send a retransmission indication to the terminal on the downlink time-frequency resource in the second time-frequency resource segment through a physical downlink control channel PDCCH.

The receiving unit 100 is further configured to receive, on the uplink time-frequency resource in the first time-frequency resource segment and/or the uplink time-frequency resource in the second time-frequency resource segment through a physical uplink shared channel PUSCH, an RRC connection request message retransmitted by the terminal.

Optionally, the receiving unit 100 and the sending unit 200 are further configured to:
transmit uplink data or downlink data with the terminal.

The uplink data is carried on the uplink time-frequency resource in the first time-frequency resource segment and/or the uplink time-frequency resource in the second time-frequency resource segment, and the downlink data is carried on the downlink time-frequency resource in the second time-frequency resource segment.

Optionally, in the first time-frequency resource, a time domain position of the uplink time-frequency resource and/or a time domain position of the idle time-frequency resource are/is after a time domain position of the time-frequency resource for sending the synchronization signal and the PBCH; or
a time domain position of the uplink time-frequency resource and/or a time domain position of the idle time-frequency resource are/is before a time domain position of the time-frequency resource for sending the synchronization signal and the PBCH.

Optionally, a periodicity of the preset frame structure is 1280 milliseconds, the duration of the first time-frequency resource segment is 40 milliseconds, in the first time-frequency resource, total duration of the uplink time-frequency resource and/or the idle time-frequency resource is 20 milliseconds, the second time-frequency resource segment includes 31 data frames, and duration of each data frame is 40 milliseconds;
a periodicity of the preset frame structure is 1280 milliseconds, the duration of the first time-frequency resource segment is 80 milliseconds, in the first time-frequency resource, total duration of the uplink time-frequency resource and/or the idle time-frequency resource is 60 milliseconds, the second time-frequency resource segment includes 15 data frames, and duration of each data frame is 80 milliseconds; or
a periodicity of the preset frame structure is 1280 milliseconds, the duration of the first time-frequency resource segment is 20 milliseconds, in the first time-frequency resource, total duration of the uplink time-frequency resource and/or the idle time-frequency resource is 0 milliseconds, the second time-frequency resource segment includes 63 data frames, and duration of each data frame is 20 milliseconds.

FIG. 9 is a schematic composition diagram of another base station according to an embodiment of this application. As shown in FIG. 8, the base station may include a processor 110, a memory 120, and a bus 130. The processor 110 and the memory 120 are connected by using the bus 130. The memory 120 is configured to store an instruction. The processor 110 is configured to execute the instruction stored in the memory 120, to implement the steps in the methods corresponding to FIG. 3 and FIG. 4.

Further, the base station may further include an input port 140 and an output port 150. The processor 110, the memory 120, the input port 140, and the output port 150 may be connected by using the bus 130.

The processor 110 is configured to execute the instruction stored in the memory 120, to control the input port 140 to receive a signal, and control the output port 150 to send a signal, to complete the steps performed by the base station in the foregoing methods. The input port 140 and the output port 150 may be a same physical entity or different physical entities. When the input port 140 and the output port 150 are the same physical entity, the input port 140 and the output port 150 may be collectively referred to as an input/output port. The memory 120 may be integrated into the processor 110, or may be disposed separately from the processor 110.

In an implementation, it may be considered that functions of the input port 140 and the output port 150 are implemented by using a transceiver circuit or a dedicated transceiver chip. It may be considered that the processor 110 is implemented by using a dedicated processing chip, a processing circuit, a processor, or a general-purpose chip.

In another implementation, it may be considered that the base station provided in this embodiment of this application is implemented by using a general-purpose computer. To be specific, program code that is used to implement functions of the processor 110, the input port 140, and the output port 150 is stored in the memory, and a general-purpose processor implements the functions of the processor 110, the input port 140, and the output port 150 by executing the code in the memory.

For concepts, explanations, detailed descriptions, and other steps of the base station that are related to the technical solutions provided in this embodiment of this application, refer to the descriptions of the content in the foregoing methods or other embodiments. Details are not described herein again.

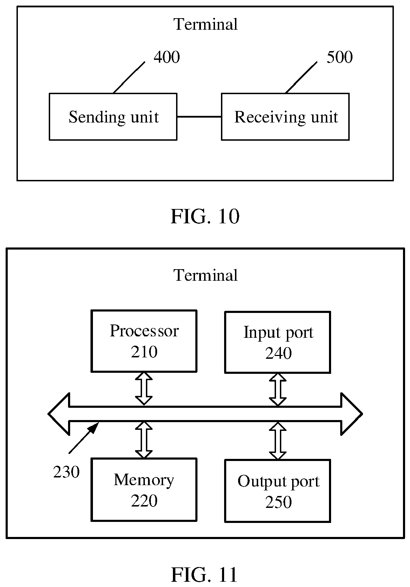

FIG. 10 is a schematic composition diagram of a terminal according to an embodiment of this application. The terminal includes:
a sending unit 400, configured to send a random access request message to a base station based on a preset frame structure; and
a receiving unit 500, configured to receive a random access response message sent by the base station based on the preset frame structure.

The sending unit 400 is further configured to send a radio resource control RRC connection request message to the base station based on the preset frame structure.

The receiving unit 500 is further configured to receive a contention resolution message sent by the base station based on the preset frame structure, to complete random access of the terminal.

The preset frame structure includes a first time-frequency resource segment and a second time-frequency resource segment. The first time-frequency resource segment includes a time-frequency resource used to send a synchronization signal and a physical broadcast channel PBCH, and further includes an idle time-frequency resource and/or an uplink time-frequency resource used to send uplink information. The second time-frequency resource segment includes an integer quantity of data frames with same duration. Duration of the first time-frequency resource segment is equal to duration of any data frame in the second time-frequency resource segment. The data frame includes a downlink time-frequency resource used to send downlink information and an uplink time-frequency resource used to send uplink information. The random access request message and the RRC connection request message are carried on the uplink time-frequency resource in the first time-frequency resource segment and/or the uplink time-frequency resource in the second time-frequency resource segment. The random access response message and the contention resolution message are carried on the downlink time-frequency resource in the second time-frequency resource segment.

Optionally, the receiving unit 500 is further configured to:
receive the synchronization signal and the PBCH that are sent by the base station on the first time-frequency resource segment in the preset frame structure; and
receive system information sent by the base station on the downlink time-frequency resource in the second time-frequency resource segment through a physical downlink shared channel PDSCH.

FIG. 10 is a schematic composition diagram of a terminal according to an embodiment of this application. The terminal further includes:
a measurement unit 600 (not shown in the figure), configured to switch to another frequency on the idle time-frequency resource, to complete signal quality measurement of a neighboring cell.

Optionally, if the terminal does not send the RRC connection request message or fails to send the RRC connection request message, the receiving unit 500 is further configured to receive a retransmission indication sent by the base station on the downlink time-frequency resource in the second time-frequency resource segment through a physical downlink control channel PDCCH.

The sending unit 600 is further configured to retransmit an RRC connection request message to the base station on the uplink time-frequency resource in the first time-frequency resource segment and/or the uplink time-frequency resource in the second time-frequency resource segment through a physical uplink shared channel PUSCH.

Optionally, the sending unit 600 and the receiving unit 500 are further configured to:
transmit uplink data or downlink data with the base station.

The uplink data is carried on the uplink time-frequency resource in the first time-frequency resource segment and/or the uplink time-frequency resource in the second time-frequency resource segment, and the downlink data is carried on the downlink time-frequency resource in the second time-frequency resource segment.

Optionally, in the first time-frequency resource, a time domain position of the uplink time-frequency resource and/or a time domain position of the idle time-frequency resource are/is after a time domain position of the time-frequency resource for sending the synchronization signal and the PBCH; or
a time domain position of the uplink time-frequency resource and/or a time domain position of the idle time-frequency resource are/is before a time domain position of the time-frequency resource for sending the synchronization signal and the PBCH.

Optionally, a periodicity of the preset frame structure is 1280 milliseconds, the duration of the first time-frequency resource segment is 40 milliseconds, in the first time-frequency resource, total duration of the uplink time-frequency resource and/or the idle time-frequency resource is 20 milliseconds, the second time-frequency resource segment includes 31 data frames, and duration of each data frame is 40 milliseconds;
a periodicity of the preset frame structure is 1280 milliseconds, the duration of the first time-frequency resource segment is 80 milliseconds, in the first time-frequency resource, total duration of the uplink time-frequency resource and/or the idle time-frequency resource is 60 milliseconds, the second time-frequency resource segment includes 15 data frames, and duration of each data frame is 80 milliseconds; or
a periodicity of the preset frame structure is 1280 milliseconds, the duration of the first time-frequency resource segment is 20 milliseconds, in the first time-frequency resource, total duration of the uplink time-frequency resource and/or the idle time-frequency resource is 0 milliseconds, the second time-frequency resource segment includes 63 data frames, and duration of each data frame is 20 milliseconds.

FIG. 11 is a schematic composition diagram of another terminal according to an embodiment of this application. As shown in FIG. 11, the terminal may include a processor 210, a memory 220, and a bus 230. The processor 210 and the memory 220 are connected by using the bus 230. The memory 220 is configured to store an instruction. The processor 210 is configured to execute the instruction stored in the memory 220, to implement the steps in the methods corresponding to FIG. 3 and FIG. 4.

Further, the terminal may include an input port 240 and an output port 250. The processor 210, the memory 220, the input port 240, and the output port 250 may be connected by using the bus 230.

The processor 210 is configured to execute the instruction stored in the memory 220, to control the input port 240 to receive a signal, and control the output port 250 to send a signal, to complete the steps performed by the terminal in the foregoing methods. The input port 240 and the output port 250 may be a same physical entity or different physical entities. When the input port 140 and the output port 150 are the same physical entity, the input port 140 and the output port 150 may be collectively referred to as an input/output port. The memory 220 may be integrated into the processor 210, or may be disposed separately from the processor 210.

In an implementation, it may be considered that functions of the input port 240 and the output port 250 are implemented by using a transceiver circuit or a dedicated transceiver chip. It may be considered that the processor 210 is implemented by using a dedicated processing chip, a processing circuit, a processor, or a general-purpose chip.

In another implementation, it may be considered that the terminal provided in this embodiment of this application is implemented by using a general-purpose computer. To be specific, program code that is used to implement functions of the processor 210, the input port 240, and the output port 250 is stored in the memory, and a general-purpose processor implements the functions of the processor 210, the input port 240, and the output port 250 by executing the code in the memory.

For concepts, explanations, detailed descriptions, and other steps of the terminal that are related to the technical solutions provided in this embodiment of this application, refer to the descriptions of the content in the foregoing methods or other embodiments. Details are not described herein again.

A person skilled in the art may understand that, for ease of description, FIG. 9 and FIG. 11 show only one memory and only one processor. Actually, a controller may include a plurality of processors and a plurality of memories. The memory may also be referred to as a storage medium, a storage device, or the like. This is not limited in this embodiment of this application. In the embodiment of this application, the processor may be a central processing unit (Central Processing Unit, "CPU" for short), or the processor may be another general purpose processor, a digital signal processor (DSP), an application-specific integrated circuit (ASIC), a field programmable gate array (FPGA), or another programmable logic device, a discrete gate or a transistor logic device, a discrete hardware component, or the like. The general-purpose processor may be a microprocessor, or the processor may be any conventional processor or the like. The memory may include a read-only memory and a random access memory, and provide an instruction and data to the processor. A part of the memory may further include a nonvolatile random access memory. The bus may further include a power bus, a control bus, a status signal bus, and the like, in addition to a data bus. However, for clear description, various types of buses in the figure are marked as the bus.

According to the method, the base station, the terminal, and the frame structure that are provided in the embodiments of this application, an embodiment of this application further provides a communications system that includes a base station and a terminal. The base station and the terminal may communicate with each other by using the methods shown in FIG. 3 and FIG. 4 and a frame structure. For details of the frame structure, refer to related descriptions in FIG. 5 to FIG. 7. Details are not described herein again. For a specific communication procedure, refer to a standard procedure in an existing NB-IoT-U. Details are not described herein again.

It should be further understood that "first", "second", and various numerical symbols in this specification are merely used for distinguishing for ease of description, and are not used to limit a scope of the embodiments of this application.

It should be understood that sequence numbers of the foregoing processes do not mean execution sequences in the embodiments of this application. The execution sequences of the processes should be determined based on functions and internal logic of the processes, and should not be construed as any limitation on the implementation processes of the embodiments of this application.

A person of ordinary skill in the art may be aware that various illustrative logical blocks (illustrative logical block) and steps (step) described in the embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that such an implementation goes beyond the scope of this application.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or another form.

All or some of the foregoing embodiments may be implemented by using software, hardware, firmware, or any combination thereof. When the software is used to implement the embodiments, all or some of the embodiments may be implemented in a form of a computer program product. The computer program product includes one or more computer instructions. When the computer program instructions are loaded and executed on the computer, the procedure or functions according to the embodiments of this application are fully or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) manner or in a wireless (for example, infrared, radio, and microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a base station, a random access request message sent by a terminal based on a preset frame structure;
sending, by the base station, a random access response message to the terminal based on the preset frame structure;
receiving, by the base station, a radio resource control RRC connection request message sent by the terminal based on the preset frame structure; and
sending, by the base station, a contention resolution message to the terminal based on the preset frame structure, to complete random access of the terminal, wherein
the preset frame structure comprises a first time-frequency resource segment and a second time-frequency resource segment, wherein the first time-frequency resource segment comprises a time-frequency resource used to send a synchronization signal and a physical broadcast channel PBCH, and further comprises an idle time-frequency resource and/or an uplink time-frequency resource used to send uplink information, the second time-frequency resource segment comprises an integer quantity of data frames with same duration, duration of the first time-frequency resource segment is equal to duration of any data frame in the second time-frequency resource segment, and the data frame comprises a downlink time-frequency resource used to send downlink information and an uplink time-frequency resource used to send uplink information; and the random access request message and the RRC connection request message are carried on the uplink time-frequency resource in the first time-frequency resource segment and/or the uplink time-frequency resource in the second time-frequency resource segment, and the random access response message and the contention resolution message are carried on the downlink time-frequency resource in the second time-frequency resource segment.

2. The method according to claim 1, wherein before the receiving, by a base station, a random access request message sent by a terminal based on a preset frame structure, the method further comprises:
sending, by the base station, the synchronization signal and the PBCH to the terminal on the first time-frequency resource segment in the preset frame structure; and
sending, by the base station, system information to the terminal on the downlink time-frequency resource in the second time-frequency resource segment through a physical downlink shared channel PDSCH.

3. The method according to claim 1, wherein the method further comprises:
switching, by the base station, to another frequency on the idle time-frequency resource, to complete signal quality measurement or interference level measurement.

4. The method according to claim 1, wherein if the base station does not receive the RRC connection request message, the base station sends a retransmission indication to the terminal on the downlink time-frequency resource in the second time-frequency resource segment through a physical downlink control channel PDCCH; and
the base station receives, on the uplink time-frequency resource in the first time-frequency resource segment and/or the uplink time-frequency resource in the second time-frequency resource segment through a physical uplink shared channel PUSCH, an RRC connection request message retransmitted by the terminal.

5. The method according to claim 1, wherein after the random access of the terminal is completed, the method further comprises:
transmitting, by the base station, uplink data or downlink data with the terminal, wherein
the uplink data is carried on the uplink time-frequency resource in the first time-frequency resource segment and/or the uplink time-frequency resource in the second time-frequency resource segment, and the downlink data is carried on the downlink time-frequency resource in the second time-frequency resource segment.

6. The method according to claim 1, wherein in the first time-frequency resource, a time domain position of the uplink time-frequency resource and/or a time domain position of the idle time-frequency resource are/is after a time domain position of the time-frequency resource for sending the synchronization signal and the PBCH; or
a time domain position of the uplink time-frequency resource and/or a time domain position of the idle time-frequency resource are/is before a time domain position of the time-frequency resource for sending the synchronization signal and the PBCH.

7. The method according to any one of claims 1 to 6, wherein a periodicity of the preset frame structure is 1280 milliseconds, the duration of the first time-frequency resource segment is 40 milliseconds, in the first time-frequency resource, total duration of the uplink time-frequency resource and/or the idle time-frequency resource is 20 milliseconds, the second time-frequency resource segment comprises 31 data frames, and duration of each data frame is 40 milliseconds;
a periodicity of the preset frame structure is 1280 milliseconds, the duration of the first time-frequency resource segment is 80 milliseconds, in the first time-frequency resource, total duration of the uplink time-frequency resource and/or the idle time-frequency resource is 60 milliseconds, the second time-frequency resource segment comprises 15 data frames, and duration of each data frame is 80 milliseconds; or
a periodicity of the preset frame structure is 1280 milliseconds, the duration of the first time-frequency resource segment is 20 milliseconds, in the first time-frequency resource, total duration of the uplink time-frequency resource and/or the idle time-frequency resource is 0 milliseconds, the second time-frequency resource segment comprises 63 data frames, and duration of each data frame is 20 milliseconds.

8. A communication method, comprising:
sending, by a terminal, a random access request message to a base station based on a preset frame structure;
receiving, by the terminal, a random access response message sent by the base station based on the preset frame structure;
sending, by the terminal, a radio resource control RRC connection request message to the base station based on the preset frame structure; and
receiving, by the terminal, a contention resolution message sent by the base station based on the preset frame structure, to complete random access of the terminal, wherein
the preset frame structure comprises a first time-frequency resource segment and a second time-frequency resource segment, wherein the first time-frequency resource segment comprises a time-frequency resource used to send a synchronization signal and a physical broadcast channel PBCH, and further comprises an idle time-frequency resource and/or an uplink time-frequency resource used to send uplink information, the second time-frequency resource segment comprises an integer quantity of data frames with same duration, duration of the first time-frequency resource segment is equal to duration of any data frame in the second time-frequency resource segment, and the data frame comprises a downlink time-frequency resource used to send downlink information and an uplink time-frequency resource used to send uplink information; and the random access request message and the RRC connection request message are carried on the uplink time-frequency resource in the first time-frequency resource segment and/or the uplink time-frequency resource in the second time-frequency resource segment, and the random access response message and the contention resolution message are carried on the downlink time-frequency resource in the second time-frequency resource segment.

9. The method according to claim 8, wherein before the sending, by a terminal, a random access request message to a base station based on a preset frame structure, the method further comprises:
receiving, by the terminal, the synchronization signal and the PBCH that are sent by the base station on the first time-frequency resource segment in the preset frame structure; and
receiving, by the terminal, system information sent by the base station on the downlink time-frequency resource in the second time-frequency resource segment through a physical downlink shared channel PDSCH.

10. The method according to claim 8, wherein the method further comprises:
switching, by the terminal, to another frequency on the idle time-frequency resource, to complete signal quality measurement of a neighboring cell.

11. The method according to claim 8, wherein if the terminal does not send the RRC connection request message or fails to send the RRC connection request message, the terminal receives a retransmission indication sent by the base station on the downlink time-frequency resource in the second time-frequency resource segment through a physical downlink control channel PDCCH; and
retransmitting, by the terminal, an RRC connection request message to the base station on the uplink time-frequency resource in the first time-frequency resource segment and/or the uplink time-frequency resource in the second time-frequency resource segment through a physical uplink shared channel PUSCH.

12. The method according to claim 8, wherein after the random access of the terminal is completed, the method further comprises:
transmitting, by the terminal, uplink data or downlink data with the base station, wherein
the uplink data is carried on the uplink time-frequency resource in the first time-frequency resource segment and/or the uplink time-frequency resource in the second time-frequency resource segment, and the downlink data is carried on the downlink time-frequency resource in the second time-frequency resource segment.

13. The method according to claim 8, wherein in the first time-frequency resource, a time domain position of the uplink time-frequency resource and/or a time domain position of the idle time-frequency resource are/is after a time domain position of the time-frequency resource for sending the synchronization signal and the PBCH; or
a time domain position of the uplink time-frequency resource and/or a time domain position of the idle time-frequency resource are/is before a time domain position of the time-frequency resource for sending the synchronization signal and the PBCH.

14. The method according to any one of claims 8 to 13, wherein a periodicity of the preset frame structure is 1280 milliseconds, the duration of the first time-frequency resource segment is 40 milliseconds, in the first time-frequency resource, total duration of the uplink time-frequency resource and/or the idle time-frequency resource is 20 milliseconds, the second time-frequency resource segment comprises 31 data frames, and duration of each data frame is 40 milliseconds;
a periodicity of the preset frame structure is 1280 milliseconds, the duration of the first time-frequency resource segment is 80 milliseconds, in the first time-frequency resource, total duration of the uplink time-frequency resource and/or the idle time-frequency resource is 60 milliseconds, the second time-frequency resource segment comprises 15 data frames, and duration of each data frame is 80 milliseconds; or
a periodicity of the preset frame structure is 1280 milliseconds, the duration of the first time-frequency resource segment is 20 milliseconds, in the first time-frequency resource, total duration of the uplink time-frequency resource and/or the idle time-frequency resource is 0 milliseconds, the second time-frequency resource segment comprises 63 data frames, and duration of each data frame is 20 milliseconds.

15. Abase station, comprising:
a receiving unit, configured to receive a random access request message sent by a terminal based on a preset frame structure; and
a sending unit, configured to send a random access response message to the terminal based on the preset frame structure, wherein
the receiving unit is further configured to receive a radio resource control RRC connection request message sent by the terminal based on the preset frame structure; and
the sending unit is further configured to send a contention resolution message to the terminal based on the preset frame structure, to complete random access of the terminal, wherein
the preset frame structure comprises a first time-frequency resource segment and a second time-frequency resource segment, wherein the first time-frequency resource segment comprises a time-frequency resource used to send a synchronization signal and a physical broadcast channel PBCH, and further comprises an idle time-frequency resource and/or an uplink time-frequency resource used to send uplink information, the second time-frequency resource segment comprises an integer quantity of data frames with same duration, duration of the first time-frequency resource segment is equal to duration of any data frame in the second time-frequency resource segment, and the data frame comprises a downlink time-frequency resource used to send downlink information and an uplink time-frequency resource used to send uplink information; and the random access request message and the RRC connection request message are carried on the uplink time-frequency resource in the first time-frequency resource segment and/or the uplink time-frequency resource in the second time-frequency resource segment, and the random access response message and the contention resolution message are carried on the downlink time-frequency resource in the second time-frequency resource segment.

16. The base station according to claim 15, wherein the sending unit is further configured to:
send the synchronization signal and the PBCH to the terminal on the first time-frequency resource segment in the preset frame structure; and
send system information to the terminal on the downlink time-frequency resource in the second time-frequency resource segment through a physical downlink shared channel PDSCH.

17. The base station according to claim 15, wherein the base station further comprises:
a measurement unit, configured to switch to another frequency on the idle time-frequency resource, to complete signal quality measurement or interference level measurement.

18. The base station according to claim 15, wherein if the receiving unit does not receive the RRC connection request message, the sending unit is further configured to send a retransmission indication to the terminal on the downlink time-frequency resource in the second time-frequency resource segment through a physical downlink control channel PDCCH; and
the receiving unit is further configured to receive, on the uplink time-frequency resource in the first time-frequency resource segment and/or the uplink time-frequency resource in the second time-frequency resource segment through a physical uplink shared channel PUSCH, an RRC connection request message retransmitted by the terminal.

19. The base station according to claim 15, wherein the receiving unit and the sending unit are further configured to:
transmit uplink data or downlink data with the terminal, wherein
the uplink data is carried on the uplink time-frequency resource in the first time-frequency resource segment and/or the uplink time-frequency resource in the second time-frequency resource segment, and the downlink data is carried on the downlink time-frequency resource in the second time-frequency resource segment.

20. The base station according to claim 15, wherein in the first time-frequency resource, a time domain position of the uplink time-frequency resource and/or a time domain position of the idle time-frequency resource are/is after a time domain position of the time-frequency resource for sending the synchronization signal and the PBCH; or
a time domain position of the uplink time-frequency resource and/or a time domain position of the idle time-frequency resource are/is before a time domain position of the time-frequency resource for sending the synchronization signal and the PBCH.

21. The base station according to any one of claims 15 to 20, wherein a periodicity of the preset frame structure is 1280 milliseconds, the duration of the first time-frequency resource segment is 40 milliseconds, in the first time-frequency resource, total duration of the uplink time-frequency resource and/or the idle time-frequency resource is 20 milliseconds, the second time-frequency resource segment comprises 31 data frames, and duration of each data frame is 40 milliseconds;
a periodicity of the preset frame structure is 1280 milliseconds, the duration of the first time-frequency resource segment is 80 milliseconds, in the first time-frequency resource, total duration of the uplink time-frequency resource and/or the idle time-frequency resource is 60 milliseconds, the second time-frequency resource segment comprises 15 data frames, and duration of each data frame is 80 milliseconds; or
a periodicity of the preset frame structure is 1280 milliseconds, the duration of the first time-frequency resource segment is 20 milliseconds, in the first time-frequency resource, total duration of the uplink time-frequency resource and/or the idle time-frequency resource is 0 milliseconds, the second time-frequency resource segment comprises 63 data frames, and duration of each data frame is 20 milliseconds.

22. Abase station, comprising:
a processor, a memory, and a bus, wherein the processor and the memory are connected by using the bus, the memory is configured to store a group of program code, and the processor is configured to invoke the program code stored in the memory to perform the step according to any one of claims 1 to 7.

23. A terminal, comprising:
a sending unit, configured to send a random access request message to a base station based on a preset frame structure; and
a receiving unit, configured to receive a random access response message sent by the base station based on the preset frame structure, wherein
the sending unit is further configured to send a radio resource control RRC connection request message to the base station based on the preset frame structure; and
the receiving unit is further configured to receive a contention resolution message sent by the base station based on the preset frame structure, to complete random access of the terminal, wherein
the preset frame structure comprises a first time-frequency resource segment and a second time-frequency resource segment, wherein the first time-frequency resource segment comprises a time-frequency resource used to send a synchronization signal and a physical broadcast channel PBCH, and further comprises an idle time-frequency resource and/or an uplink time-frequency resource used to send uplink information, the second time-frequency resource segment comprises an integer quantity of data frames with same duration, duration of the first time-frequency resource segment is equal to duration of any data frame in the second time-frequency resource segment, and the data frame comprises a downlink time-frequency resource used to send downlink information and an uplink time-frequency resource used to send uplink information; and the random access request message and the RRC connection request message are carried on the uplink time-frequency resource in the first time-frequency resource segment and/or the uplink time-frequency resource in the second time-frequency resource segment, and the random access response message and the contention resolution message are carried on the downlink time-frequency resource in the second time-frequency resource segment.

24. The terminal according to claim 23, wherein the receiving unit is further configured to:
receive the synchronization signal and the PBCH that are sent by the base station on the first time-frequency resource segment in the preset frame structure; and
receive system information sent by the base station on the downlink time-frequency resource in the second time-frequency resource segment through a physical downlink shared channel PDSCH.

25. The terminal according to claim 23, wherein the terminal further comprises:
a measurement unit, configured to switch to another frequency on the idle time-frequency resource, to complete signal quality measurement of a neighboring cell.

26. The terminal according to claim 23, wherein if the terminal does not send the RRC connection request message or fails to send the RRC connection request message, the receiving unit is further configured to receive a retransmission indication sent by the base station on the downlink time-frequency resource in the second time-frequency resource segment through a physical downlink control channel PDCCH; and
the sending unit is further configured to retransmit an RRC connection request message to the base station on the uplink time-frequency resource in the first time-frequency resource segment and/or the uplink time-frequency resource in the second time-frequency resource segment through a physical uplink shared channel PUSCH.

27. The terminal according to claim 23, wherein the sending unit and the receiving unit are further configured to:
transmit uplink data or downlink data with the base station, wherein
the uplink data is carried on the uplink time-frequency resource in the first time-frequency resource segment and/or the uplink time-frequency resource in the second time-frequency resource segment, and the downlink data is carried on the downlink time-frequency resource in the second time-frequency resource segment.

28. The terminal according to claim 23, wherein in the first time-frequency resource, a time domain position of the uplink time-frequency resource and/or a time domain position of the idle time-frequency resource are/is after a time domain position of the time-frequency resource for sending the synchronization signal and the PBCH; or
a time domain position of the uplink time-frequency resource and/or a time domain position of the idle time-frequency resource are/is before a time domain position of the time-frequency resource for sending the synchronization signal and the PBCH.

29. The terminal according to any one of claims 23 to 28, wherein a periodicity of the preset frame structure is 1280 milliseconds, the duration of the first time-frequency resource segment is 40 milliseconds, in the first time-frequency resource, total duration of the uplink time-frequency resource and/or the idle time-frequency resource is 20 milliseconds, the second time-frequency resource segment comprises 31 data frames, and duration of each data frame is 40 milliseconds;
a periodicity of the preset frame structure is 1280 milliseconds, the duration of the first time-frequency resource segment is 80 milliseconds, in the first time-frequency resource, total duration of the uplink time-frequency resource and/or the idle time-frequency resource is 60 milliseconds, the second time-frequency resource segment comprises 15 data frames, and duration of each data frame is 80 milliseconds; or
a periodicity of the preset frame structure is 1280 milliseconds, the duration of the first time-frequency resource segment is 20 milliseconds, in the first time-frequency resource, total duration of the uplink time-frequency resource and/or the idle time-frequency resource is 0 milliseconds, the second time-frequency resource segment comprises 63 data frames, and duration of each data frame is 20 milliseconds.

30. A terminal, comprising:
a processor, a memory, and a bus, wherein the processor and the memory are connected by using the bus, the memory is configured to store a group of program code, and the processor is configured to invoke the program code stored in the memory to perform the step according to any one of claims 8 to 14.
